# EUROPÄISCHE PATENTANMELDUNG

(11) **EP 2 599 674 A2**
(43) Veröffentlichungstag der Anmeldung: **05.06.2013**
(21) Anmeldenummer: 12191453.5
(22) Anmeldetag: 06.11.2012
(51) Int. Cl.: B60S 1/50, B60K 15/03

(54) **Flüssigkeitsbehälter für ein Kraftfahrzeug**

(30) Priorität: 30.11.2011 DE 202011052152 U
(71) Anmelder: REHAU AG + Co, 95111 Rehau (DE)
(72) Erfinder: Zielke, Peter, 08626 Adorf (DE); Schippan, Rico, 95111 Rehau (DE); Essig, Ulrich, 71283 Weissach (DE); Geurtz, Heinz-Jürgen, 71287 Weissach (DE)

(57) **Zusammenfassung**

Die vorliegende Erfindung bezieht sich auf einen Flüssigkeitsbehälter für ein Kraftfahrzeug mit einer Behälterwandung (2), die einen inneren Behälterhohlraum (3) definiert und mindestens eine Öffnung (4) zur Behälterbefüllung aufweist, wobei eine mindestens zwei Stellpositionen aufweisende Stellvorrichtung (6) vorgesehen ist, die in zumindest einer Stellposition die Bildung eines Gaspolsters (8), vorzugsweise Luftpolsters, innerhalb des Behälterhohlraumes (3) und damit eine lediglich teilweise Maximalbefüllung des Behälterhohlraums (3) mit Flüssigkeit (1) sicherstellt. Vorteilhaft können unterschiedlichen Fassungsvermögen über nur einen einzigen Behälter hergestellt werden, dessen Einstellung der maximal aufnehmbaren Flüssigeitsmenge über die Stellvorrichtung erfolgen kann.

## Beschreibung

Die Erfindung betrifft einen Flüssigkeitsbehälter für ein Kraftfahrzeug mit
- einer Behälterwandung, die einen inneren Behälterhohlraum definiert und mindestens eine Öffnung zur Behälterbefüllung aufweist.

Derartige Flüssigkeitsbehälter sind beispielsweise zur Speicherung von Reinigungsflüssigkeit für Windschutzscheibe, Scheinwerfer oder dergleichen in Kraftfahrzeugen bekannt. Je nach gewünschtem Fassungsvermögen des Flüssigkeitsbehälters werden entsprechend unterschiedlich große Varianten des Behälters gefertigt. Dies hat zur Folge, dass für jedes Fassungsvermögen jeweils separate Produktionen erforderlich sind. Üblicherweise erfolgt die Fertigung derartiger Behälter aus Kunststoff mittels eines Blasform- oder eines Spritzgussverfahrens. Bei letzterem werden zwei Halbschalen spritzgegossen und anschließend miteinander verbunden. Um unterschiedliche Behältervolumina bereitzustellen, werden in der Regel beide Halbschalen an die jeweilige Variante angepasst. Somit sind zur Bereitstellung von zwei unterschiedlichen Fassungsvermögen im Spritzgussverfahren in der Regel vier Kavitäten erforderlich. Sofern der Behälter mittels des ebenfalls üblichen Blasformverfahrens hergestellt wird, müssen in der Regel zwei unterschiedliche Blasformwerkzeuge hergestellt werden.

Der Bedarf an unterschiedlichen Fassungsvermögen des Flüssigkeitsbehälters kann verschiedene Gründe haben. Grundsätzlich ist aus Energieeinspargründen die Mitführung von möglichst wenig Reinigungsflüssigkeit gewünscht, da jedes Kilogramm zusätzlich an einem Fahrzeug zu einem erhöhten Kraftstoffverbrauch führt. Andererseits ist ein sehr geringes Fassungsvermögen unkomfortabel, da entsprechend häufig eine Nachfüllung des Behälters erforderlich ist. Insbesondere bei winterlichen Straßenverhältnissen ergibt sich hieraus auch ein sicherheitstechnisches Risiko, da bei entsprechender Witterung in sehr kurzer Zeit ein hoher Verbrauch an Reinigungsflüssigkeit entstehen kann, um beispielsweise eine klare Sicht durch die Windschutzscheibe des Fahrzeuges sicherzustellen. Ein besonders großer Verbrauch an Reinigungsflüssigkeit liegt insbesondere dann vor, sofern das Fahrzeug über eine Scheinwerferreinigungsanlage verfügt, welche einen zusätzlichen Bedarf an Reinigungsflüssigkeit verursacht. Da Scheinwerferreinigungsanlagen in der Regel nicht zur serienmäßigen Ausstattung eines Fahrzeuges gehören, werden häufig für ein und dieselbe Fahrzeugreihe demzufolge sowohl Flüssigkeitsbehälter für Reinigungsflüssigkeit mit kleinerem Fassungsvermögen (Ausstattung ohne Scheinwerferreinigungsanlage) und mit großem Fassungsvermögen (Ausstattung mit Scheinwerferreinigungsanlage) benötigt.

Vor diesem Hintergrund liegt der Erfindung die Aufgabe zugrunde, einen Flüssigkeitsbehälter mit den eingangs beschriebenen Merkmalen anzugeben, welcher unterschiedlichen Ausstattungsvarianten eines Fahrzeuges Rechnung trägt und dabei gleichzeitig kostengünstig herstellbar ist.

Erfindungsgemäß wird diese Aufgabe dadurch gelöst, dass eine mindestens zwei Stellpositionen aufweisende Stellvorrichtung vorgesehen ist, die in zumindest einer Stellposition die Bildung eines Gaspolsters, vorzugsweise Luftpolsters, innerhalb des Behälterhohlraums und damit einer lediglich teilweise Maximalbefüllung des Behälterhohlraums sicherstellt. Mittels der erfindungsgemäßen Stellvorrichtung ist mindestens eine Stellposition einstellbar, welche ein vollständiges Befüllen des Behälterhohlraums mit Flüssigkeit verhindert. Auf diese Weise kann der erfindungsgemäße Flüssigkeitsbehälter einerseits in einer ersten Stellposition mit einem niedrigen Flüssigkeitsfassungsvermögen bereitgestellt werden, wie es zum Beispiel zur Speicherung von Reinigungsflüssigkeit für Fahrzeuge ohne Scheinwerferreinigungsanlage zweckmäßig ist. Die zweite Stellposition erlaubt andererseits ein größeres Fassungsvermögen durch eine zum Beispiel praktisch vollständig mögliche Befüllung des Behälters, wie sie beispielsweise für Fahrzeuge mit Scheinwerferreinigungsanlagen zweckmäßig ist. Somit muss für die Bereitstellung der gewünschten unterschiedlichen Fassungsvermögen nur ein einziger erfindungsgemäßer Behälter hergestellt werden, dessen Einstellung der maximal aufnehmbaren Flüssigeitsmenge über die Stellvorrichtung erfolgen kann. Das Gaspolster verhindert hierbei ein vollständiges Befüllen des Behälters mit Flüssigkeit.

Zweckmäßigerweise schließt sich an die Öffnung eine in den Behälterhohlraum nach unten erstreckende Rohrleitung an, die zum Einfüllen von Flüssigkeit durch die Öffnung in den Behälterhohlraum dient, wobei die Bildung des Luftpolsters bei einer bestimmten Flüssigkeitstauchhöhe des in den Behälterhohlraum hineinragenden unteren offenen Endes der Rohrleitung erfolgt. Diese Maßnahme beruht auf der Erkenntnis, dass die tatsächlich in den Behälter einfüllbare Flüssigkeitsmenge davon abhängig ist, ob eine Entlüftungsmöglichkeit des Behälterhohlraums gegeben ist. Bei einer Tauchung der Rohrleitung kann durch diese keine Entlüftung mehr erfolgen, so dass es im Tauchzustand der Rohrleitung prinzipiell zur Ausbildung eines erfindungsgemäßen Gaspolsters durch die noch im Behälter befindliche Luft kommen kann.

Vorzugsweise ist das untere offene Ende der Rohrleitung derart positioniert, dass es bei einem Befüllungsgrad von 90 % vollständig getaucht ist. Befüllungsgrad meint hierbei das Verhältnis vom Volumen der in den Behälterhohlraum eingefüllten Flüssigkeit zum Gesamtvolumen des Behälterhohlraums. Bevorzugt ist das untere Ende der Rohrleitung bei einem Befüllungsgrad von 75 %, z.B. 60 %, insbesondere 50 % vollständig getaucht. Hierdurch ist gewährleistet, dass zwischen dem einstellbaren kleineren und größeren Fassungsvermögen ein deutlicher Unterschied besteht, welcher z.B. dem deutlich unterschiedlichen Flüssigkeitsbedarf bei einem Fahrzeug ohne bzw. mit Scheinwerferreinigungsanlage Rechnung trägt.

Das Flüssigkeitsfassungsvermögen des Behälterhohlraums kann stufenweise einstellbar sein, z.B. über die maximale Standhöhe der Flüssigkeit im Behälterhohlraum. Bei einer besonders bevorzugten Ausführungsform der Erfindung weist die Stellvorrichtung ein Entlüftungsrohr auf, das in den Behälterhohlraum hineinragt und die Behälterwandung luftdicht durchfasst. Das Entlüftungsrohr ist in der Regel flexibel, also schlauchartig, ausgebildet. Im Rahmen der Erfindung liegt jedoch aber auch ein starr ausgebildetes Entlüftungsrohr. Zweckmäßigerweise ist das Entlüftungsrohr in der Durchfassung der Behälterwandung verschiebbar angeordnet. Das Fassungsvermögen des Behälters kann so über ein einfaches vertikales Verschieben der Entlüftungsleitung beeinflusst werden, wobei ein weit in den Behälterhohlraum hingeschobenes Entlüftungsrohr eine frühzeitige Tauchung desselben bewirkt. Bei gleichzeitig getauchter Rohrleitung erfolgt somit in diesem Fall bereits bei einem geringen Befüllungsgrad die Bildung des erfindungsgemäßen Luftpolsters durch die noch im Behälterhohlraum befindliche Luft, die nicht mehr entweichen kann. Das kleinste einstellbare Fassungsvermögen ergibt sich folglich durch eine Positionierung des unteren Endes des Entlüftungsrohr auf der Höhe des unteren Endes der Rohrleitung. Bei nur geringfügig eingeschobenem Entlüftungsrohr hingegen erfolgt die Bildung des Luftpolsters erst bei einem höheren Flüssigkeitsstand im Behälter, so dass in diesem Fall ein größeres Fassungsvermögen vorliegt.

Zweckmäßigerweise durchfasst das Entlüftungsrohr die Behälterwandung im Wesentlichen horizontal ausgerichtet und ist innerhalb des Behälters gebogen, so dass sein unterer Endbereich im Wesentlichen vertikal ausgerichtet ist. Dies erlaubt eine platzsparende Anordnung des Entlüftungsrohres außerhalb des Flüssigkeitsbehälters. Das Entlüftungsrohr kann in der Durchfassung an zumindest einer weiteren Stelle innerhalb des Behälters geführt sein. Diese Führung dient z.B. zur vorbezeichneten Umlenkung des Lüftungsrohres von seiner horizontalen Ausrichtung außerhalb des Behälters zur vertikalen Ausrichtung am unteren Ende des Entlüftungsrohres. Die Austrittsöffnung des Entlüftungsrohrs liegt zweckmäßigerweise höher als die Öffnung zur Behälterbefüllung. Hierdurch wird vermieden, dass Flüssigkeit über das Entlüftungsrohr aus dem Behälter austreten kann und damit ein unbemerktes Überfüllen des Behälters verhindert. Alternativ kann im Entlüftungsrohr auch ein Schwimmerventil angeordnet sein, welches sich bei Kontakt mit der im Entlüftungsrohr aufsteigenden Flüssigkeit schließt.

Zur Einstellung unterschiedlicher Fassungsvermögen kann das Entlüftungsrohr zumindest bereichsweise eine zumindest indirekt mit der Behälterwandung zusammenwirkende strukturierte Außenkontur zur stufenweisen Einstellung der Einschublänge aufweisen. Mittels der Einschublänge kann - wie oben beschrieben - der Beginn der Tauchung des Entlüftungsrohrs und damit die Maximalbefüllung des Behälterhohlraums eingestellt werden. So kann beispielsweise das Entlüftungsrohr zumindest bereichsweise als Wellrohr ausgebildet sein, wobei entsprechend jedem Wellenberg bzw. jedem Wellental eine bestimmte maximale Flüssigkeitsstandhöhe zugeordnet ist. Um eine ausreichend schnelle Entlüftung zu ermöglichen und Kapillareffekte möglichst gering zu halten, besitzt das Entlüftungsrohr zweckmäßigerweise einen Innendurchmesser von mindestens 3 mm, vorzugsweise mindestens 5 mm.

Das Entlüftungsrohr kann auf seiner Außenwandung mindestens eine Markierung zur Feststellung des eingestellten Fassungsvermögens aufweisen, welche mit der entsprechenden Einschublänge korreliert. Diese Markierung befindet sich zweckmäßigerweise im Bereich der Durchfassung gerade außerhalb des Behälters, sofern das zugehörige Fassungsvolumen eingestellt ist.

In einer anderen Ausführungsform der Erfindung umfasst die Stellvorrichtung eine Verschlussvorrichtung zum wahlweisen Verschluss einer zweiten Öffnung im oberen Bereich der Behälterwandung. Hier wird durch die Verschlussvorrichtung wahlweise eine Entlüftung über die zweite Öffnung an der Behälterwandung ermöglicht oder verhindert. Im letzteren Fall bildet sich wiederum bei einer Tauchung des unteren Endes der Rohrleitung ein Luftpolster, welches eine weitere Befüllung des Behälters mit Flüssigkeit verhindert. Bei geöffneter zweiter Öffnung hingegen kann die Luft auch bei getauchter Rohrleitung durch die zweite Öffnung aus dem Behälter entweichen, so dass eine weitere Befüllung des Behälters möglich ist. Die Verschlussvorrichtung kann beispielsweise als Stopfen ausgebildet sein, mit dem ein luftdichter Verschluss der zweiten Öffnung möglich ist. Zweckmäßigerweise ist unterhalb der zweiten Öffnung ein Schwimmerventil vorgesehen, welches z.B. in ein kurzes, in den Behälterhohlraum hineinragendes Röhrchen integriert ist. Bei Tauchung des Röhrchens schließt das Schwimmerventil, wodurch ein Austreten von Flüssigkeit durch die zweite Öffnung und damit eine unbemerkte Überfüllung des Behälters verhindert wird. Hierdurch wird ein unbemerktes Überfüllen des Behälters vermieden. Bei dieser Ausführungsvariante ist zweckmäßigerweise eine separate Entlüftungsleitung an der Rohrleitung angeordnet, welche gemeisam mit der Rohrleitung während des Befüllvorgangs ebenfalls getaucht wird. Hierdurch ist ein gleichmäßiger Befüllvorgang sicher gestellt. Diese Entlüftungsleitung kann insbesondere - wie im Stand der Technik bereits vielfach praktiziert - in die Rohrleitung als "Rohr-in-Rohr-Konstruktion" integriert sein.

Im Rahmen der Erfindung liegt es aber auch, dass das Gaspolster auf eine andere Weise, z.B. über einen innerhalb des Behälterhohlraums aufblasbaren Ballon als Stellvorrichtung, bereitgestellt wird. Denkbar ist auch die Einstellung des Flüssigkeitsfassungsvermögens über eine vertikal verschiebbare Rohrleitung als Stellvorrichtung, wobei die Einstellung des Fassungsvermögens in diesem Fall über die Tauchung der Rohrleitung erfolgen kann.

Der Behälterhohlraum kann in vertikaler Richtung eine deutlich größere Ausdehnung als in horizontaler Richtung aufweisen. Beispielsweise ist die vertikale Ausdehnung des Behälterhohlraums um mehr 50 % größer als dessen horizontale Ausdehung. Diese vertikale Ausrichtung erlaubt es, mittels der erfindungsgemäßen Vorrichtung über die maximal mögliche Standhöhe der Flüssigkeit im Behälterhohlraum das Fassungsvermögen sehr fein einzustellen.

Die Behälterwandung kann aus spritzgegossenem oder blasgeformtem Kunststoff bestehen. Bei der spritzgegossenen Bauform wird das Entlüftungsrohr zweckmäßigerweise vor dem Verschweißen der beiden Behälterschalen montiert. Die Behälterwandung kann ferner mindestens eine Anschlussvorrichtung zur Befestigung mindestens eines weiteren Kraftfahrzeug-Bauteils aufweisen. Da der Flüssigkeitsbehälter unabhängig von der Ausstattung des jeweiligen Fahrzeuges immer ein und dieselbe Geometrie aufweist, ergeben sich hierdurch montagetechnische Vorteile. Die Anbindung des Kraftfahrzeug-Bauteils kann somit ausstattungsunabhängig konstruiert werden. Im Stand der Technik hingegen, welcher je nach Ausstattungsvariante den Einsatz unterschiedlicher Flüssigkeitsbehälter zum Standard hat, ist dies nicht bzw. nur eingeschränkt (z.B. unter Verwendung entsprechender Adapter) möglich, da die Außenkontur der unterschiedlichen Flüssigkeitsbehälter in der Regel deutlich variiert.

Gegenstand der Erfindung ist ferner ein Flüssigkeitsbehälter mit einer Flüssigkeitsförderpumpe und/oder einem Füllstandssensor gemäß Anspruch 14 sowie ein Kraftfahrzeug mit einem Flüssigkeitsbehälter gemäß Anspruch 15.

Im Folgenden wird die Erfindung anhand von Ausführungsbeispielen darstellenden Zeichnungen ausführlich erläutert. Es zeigen schematisch:

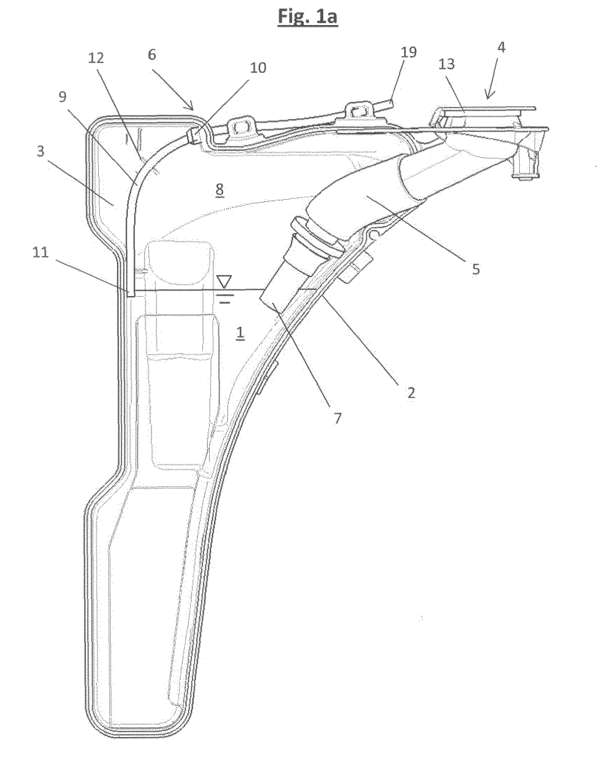

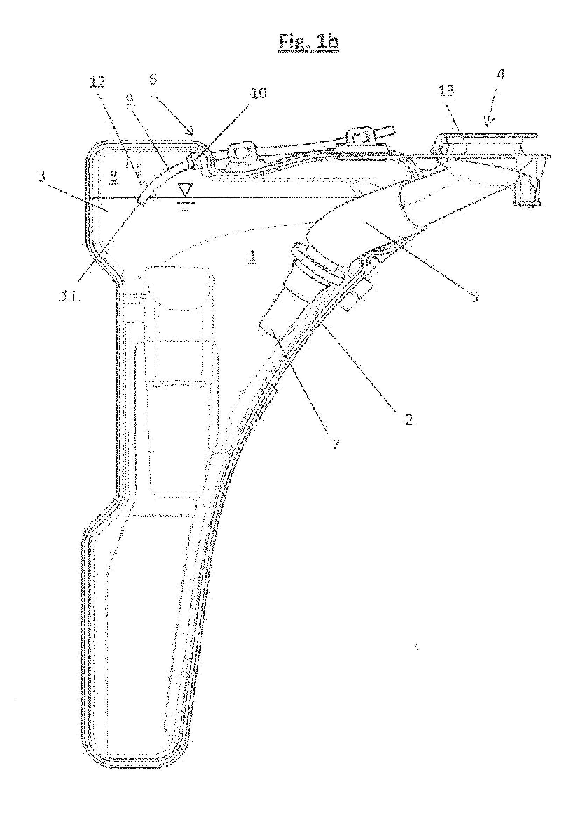

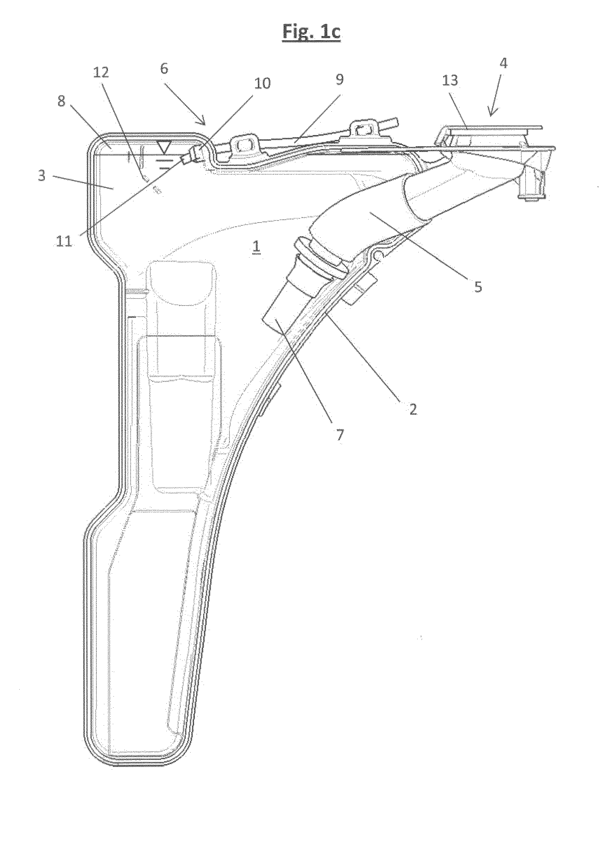

- Fig. 1 a: einen erfindungsgemäßen Flüssigkeitsbehälter, welcher auf ein geringes Flüssigkeitsfassungsvermögen eingestellt ist,
- Fig. 1 b: den in Fig. 1 a dargestellten Behälter bei eingestellter mittlerem Fassungsvermögen,
- Fig. 1 c: den in Fig. 1 a dargestellten Behälter eingestellt auf ein großes Fassungsvermögen,
- Fig. 2: ein erfindungsgemäßes Entlüftungsrohr, welches bei dem Flüssigkeitsbehälter gemäß Fig. 1 a-c zum Einsatz kommt,
- Fig. 3 a: eine weitere Ausführungsform der Erfindung, bei der ein kleines Fassungsvermögen eingestellt ist und

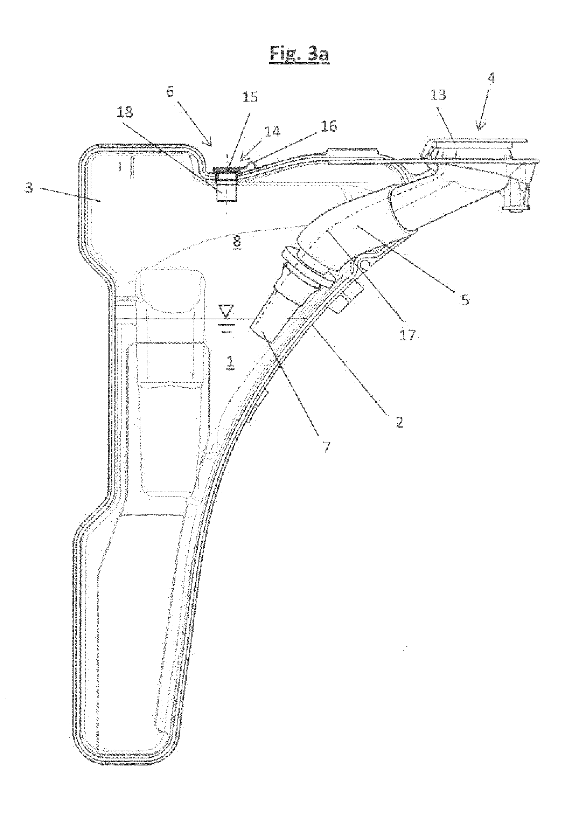

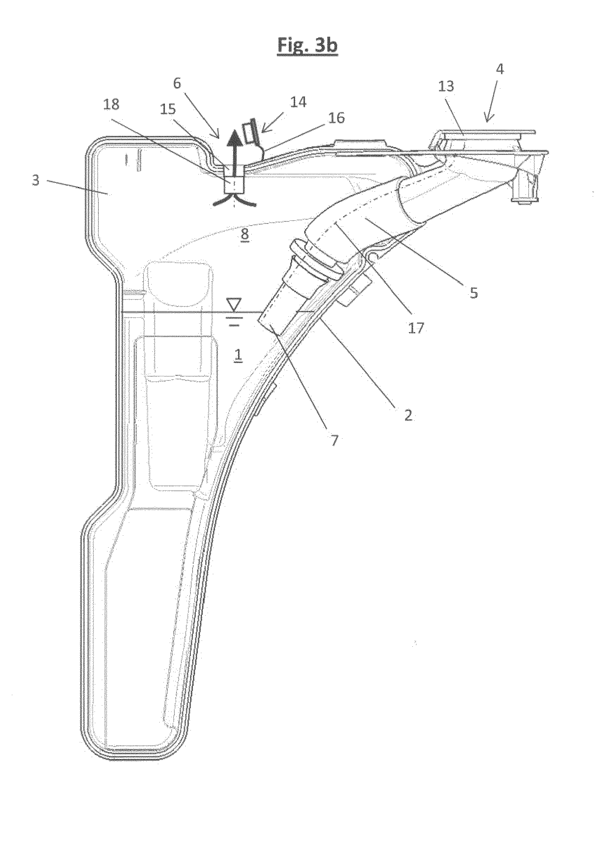

- Fig. 3 b: den in Fig. 3 a dargestellt Flüssigkeitsbehälter, bei dem eine großes Fassungsvermögen eingestellt ist.

Die Figur 1 a zeigt einen Flüssigkeitsbehälter für ein Kraftfahrzeug, der zur Speicherung von Reinigungsflüssigkeit 1 dient. Der Behälter weist eine Behälterwandung 2 auf, die einen inneren Behälterhohlraum 3 definiert und mindestens eine Öffnung 4 zur Behälterbefüllung besitzt. An die Öffnung 4 schließt sich eine in den Behälterhohlraum 3 nach unten erstreckende Rohrleitung 5 an, welche als separates Bauteil in den Behälterhohlraum 3 eingesteckt ist. Die Rohrleitung 5 dient zur Einfüllung von Reinigungsflüssigkeit 1 durch die Öffnung 4 in den Behälterhohlraum 3. Die Reinigungsflüssigkeit enthält neben Wasser reinigungsaktive Substanzen und Frostschutzmittel. Wie aus der Fig. 1 a ersichtlich, ist eine mehrere Stellpositionen aufweisende Stellvorrichtung 6 vorgesehen, wobei den Stellpositionen jeweils ein bestimmtes Flüssigkeitsfassungsvermögen des Behälters zugeordnet ist. Bei einer bestimmten Flüssigkeitstauchhöhe des in den Behälterhohlraum 3 hineinragenden unteren offenen Endes 7 der Rohrleitung 5 wird aufgrund der Wirkung der Stellvorrichtung 6 eine weitere Verdrängung der im Behälterhohlraum 3 befindlichen Luft durch die Flüssigkeit 1 verhindert und es kommt zur Bildung eines Luftpolsters 8 innerhalb des Behälterhohlraums 3,. Dieses Luftpolster 8 verhindert eine weitere Befüllung des Behälters mit Flüssigkeit 1. Somit stellt die Stellvorrichtung 6 eine lediglich teilweise Maximalbefüllung des Behälterhohlraums 3 mit Flüssigkeit 1 sicher. Das untere Ende der Rohrleitung 5 ist derart positioniert, dass es bei einem Befüllungsgrad von 50 % gerade getaucht ist. Somit kann das Fassungsvermögen mittels der Stelleinrichtung 6 in einem Bereich von rund 50 bis ca. 100 % Befüllungsgrad eingestellt werden. Im Ausführungsbeispiel gemäß Figur 1 a weist die Stellvorrichtung 6 ein flexibles Entlüftungsrohr 9 auf, das in den Behälterhohlraum 3 hineinragt und die Behälterwandung 2 luftdicht durchfasst. Das Entlüftungsrohr 9 ist hierbei in der Durchfassung 10 der Behälterwandung 2 axial verschiebbar. Die Austrittsöffnung 19 des Entlüftungsrohrs 9 liegt höher als die Öffnung 4. Hierdurch wird vermieden, dass Flüssigkeit 1 über das Entlüftungsrohr 9 aus dem Behälter austritt und damit ein unbemerktes Überfüllen des Behälters verhindert. In den Behälterhohlraum 3 ist das Entlüftungsrohr 9 nun soweit eingeschoben, dass sein unteres offenes Ende 11 etwa auf gleicher Höhe wie das offene Ende 7 der Rohrleitung 5 positioniert ist. Dies hat zur Folge, dass bei fortschreitender Befüllung des Behälters unmittelbar nach der Tauchung der Rohrleitung 5 auch eine Tauchung des Entlüftungsrohres 9 eintritt, die aufgrund des sich ab dann ausbildenden Luftpolsters 8 eine weitere Befüllung des Behälters mit Flüssigkeit 1 verhindert. Die Einstellung gemäß Fig. 1 a kommt beispielsweise dann zum Einsatz, sofern das entsprechende Fahrzeug ohne Scheinwerferreinigungsanlage ausgestattet ist und damit nur ein vergleichsweiser geringer Verbrauch von Reinigungsflüssigkeit 1 vorliegt. Die Einstellung verhindert in diesem Fall das Einfüllen einer sehr großen Flüssigkeitsmenge und trägt damit zu einer Gewichtseinsparung bei.

Die Behälterwandung 2 besteht aus zwei miteinander verschweißten Hälften aus spritzgegossenem Kunststoff, wobei das Entlüftungsrohr 11 vor dem Verschweißen montiert wird. Das Entlüftungsrohr 9 durchfasst die Behälterwandung 2 im Wesentlichen horizontal und ist innerhalb des Behälters gebogen, so dass sein unteres offenes Ende 11 im Wesentlichen vertikal ausgerichtet ist. Zur Umlenkung ist das Entlüftungsrohr 11 neben der Durchfassung 10 an einer weiteren Stelle innerhalb des Behälters in einer Führung 12 geführt. Die Führung 12 ist an eine der beiden Hälften der Behälterwandung 2 angespritzt. Um eine schnelle Entlüftung zu ermöglichen und um Kapillareffekte gering zu halten, weist das Entlüftungsrohr 9 einen Innendurchmesser von wenigstens 3 mm auf. Ferner ist die Öffnung 4 in der Behälterwandung 2 mit einem aufclipsbaren Deckel 13 verschließbar. Außerdem ist erkennbar, dass der Behälterhohlraum 3 in vertikale Richtung eine deutlich größere Ausdehnung als in horizontaler Richtung aufweist.

Bei der Einstellung gemäß Figur 1b ist das Entlüftungsrohr 11 gegenüber der Figur 1 a ein Stück weit herausgezogen worden, so dass die beschriebene Tauchung des Entlüftungsrohres 11 erst bei einer deutlich höheren Füllstandshöhe der Flüssigkeit 1 im Behälter eintritt. Entsprechend ist hier das Einfüllen von deutlich mehr Flüssigkeit 1 in den Behälter möglich.

Im Einstellzustand gemäß Figur 1c ist das Entlüftungsrohr 11 fast vollständig aus den Behälterhohlraum 3 hinausgezogen, so dass eine praktisch vollständige Befüllung des Behälters mit Flüssigkeit 1 möglich und damit ein großes Fassungsvermögen gewährleistet ist. Das Entlüftungsrohr 11 dient hier lediglich noch als Sperre gegen den Austritt von Flüssigkeit 1 durch das Entlüftungsrohr 11 selbst. Dieser Zustand wird insbesondere dann eingestellt, sofern das entsprechende Fahrzeug mit einer Scheinwerferreinigungsanlage ausgerüstet ist. In diesem Fall liegt ein hoher Verbrauch an Reinigungsflüssigkeit 1 vor, so dass aus komfort-, aber auch aus sicherheitstechnischen Gründen ein großes Reservoir an Reinigungsflüssigkeit 1 erforderlich ist.

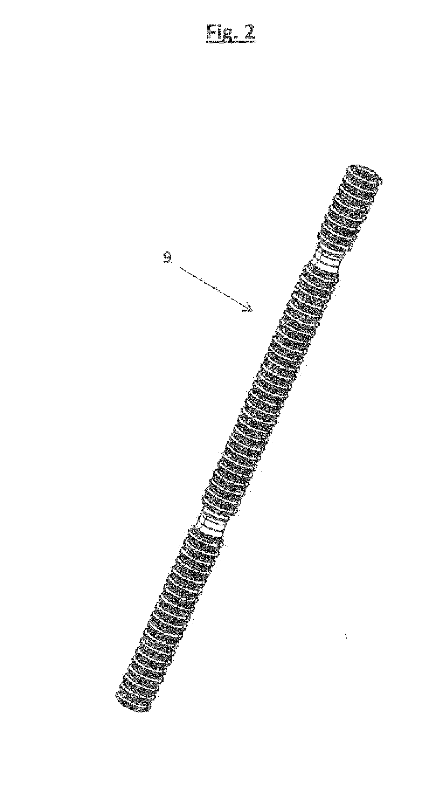

Die Figur 2 zeigt einen Teilabschnitt des in den Figuren 1a-c lediglich schematisch dargestellten Entlüftungsrohrs 11. Es ist erkennbar, dass das Entlüftungsrohr 11 bereichsweise als Wellrohr ausgebildet ist. Entsprechend kann über jedes Wellental bzw. jeden Wellenberg eine bestimmte Einstecktiefe des Entlüftungsrohres 11 in den Behälterhohlraum 3 eingestellt und hiermit das Flüssigkeitsfassungsvermögen des Behälters stufenweise eingestellt werden. Im Ausführungsbeispiel wirkt die Außenkontur des Entlüftungsrohres 11 mit der an die Behälterwandung 2 angespritzten Führung 12 zusammen. Im Bereich der Durchfassung 10 ist das Entlüftungsrohr 11 hingegen glatt ausgebildet, um eine sichere Abdichtung gegen die im Behälterhohlraum 3 befindliche Luft zu gewährleisten.

Bei der Ausführungsvariante gemäß Figur 3 a umfasst die Stellvorrichtung eine Verschlussvorrichtung 14 zum wahlweisen Verschluss einer zweiten Öffnung 15 im oberen Bereich der Behälterwandung 2. Diese Verschlussvorrichtung 14 ist im Ausführungsbeispiel als Stopfen ausgebildet, welcher mit einem vorzugsweise einstückig mit der Behälterwandung 2 ausgebildeten und mit diesem verbundenen Fangband 16 versehen ist. In Figur 3 a ist der Stopfen 14 in die zweite Öffnung 15 eingedrückt und verschließt diese luftdicht. Sofern durch die Befüllung des Behälters mit Flüssigkeit 1 eine Tauchung des unteren offenen Endes 7 der Rohrleitung 5 einsetzt, kann keine weitere Luft aus dem Behälter entweichen und der Füllvorgang ist aufgrund des sich ausbildenden Luftpolsters 8 beendet. Um bei dieser Ausführungsvariante eine gleichmäßige Flüssigkeitsbefüllung zu gewährleisten, ist innerhalb der Rohrleitung 5 eine Entlüftungsleitung angeordnet, welche über eine strichpunktierte Linie 17 angedeutet ist. Bei Tauchung der Rohrleitung 5 erfolgt somit auch eine Tauchung dieser Entlüftungsleitung 17.

Die Figur 3b zeigt die Ausführungsvariante gemäß Figur 3 a in der anderen Stellposition. Hier ist der Stopfen 14 von der zweiten Öffnung 15 entfernt worden, so dass auch bei Tauchung der Rohrleitung 5 sowie der Entlüftungsleitung 17 weiterhin Luft aus dem Behälter entweichen und damit der Füllvorgang fortgesetzt werden kann. Erst wenn der untere Rand eines an der zweiten Öffnung 15 angeordneten, in den Behälterhohlraum 3 hineinragenden Röhrchens 18 erreicht wird, ist der Füllvorgang beendet, wobei in das Röhrchen 18 ein (nicht dargestelltes) Schwimmerventil integriert ist, welches sich bei einer Tauchung des Röhrchens 18 schließt und einen unbemerkten Austritt von Flüssigkeit 1 durch die zweite Öffnung 15 und damit eine Überfüllung des Behälters verhindert.

Die Behälterwandung 2 der in den Figuren dargestellten Behälter weist ferner eine nicht näher dargestellte Anschlussvorrichtung zur Befestigung weiterer Kraftfahrzeugbauteile auf. Da erfindungsgemäß die Außenkontur des Behälters unabhängig von der Ausstattung des Fahrzeuges (z.B. ohne bzw. mit Scheinwerferreinigungsanlage) ist, liegt eine fest vorgegebene Anbindungssituation zur Befestigung weiterer Bauteile am Behälter vor, wodurch sich die Montage dieser Bauteile erheblich vereinfacht wird. Ferner ist hierdurch auch eine einfache Montage des Behälters selbst am Kraftfahrzeug möglich.

## Patentansprüche

1. Flüssigkeitsbehälter für ein Kraftfahrzeug mit ist
- einer Behälterwandung (2), die einen inneren Behälterhohlraum (3) definiert und mindestens eine Öffnung (4) zur Behälterbefüllung aufweist,
**dadurch gekennzeichnet, dass** eine mindestens zwei Stellpositionen aufweisende Stellvorrichtung (6) vorgesehen ist, die in zumindest einer Stellposition die Bildung eines Gaspolsters (8), vorzugsweise Luftpolsters, innerhalb des Behälterhohlraumes (3) und damit eine lediglich teilweise Maximalbefüllung des Behälterhohlraums (3) mit Flüssigkeit (1) sicherstellt.

2. Flüssigkeitsbehälter nach Anspruch 1, **dadurch gekennzeichnet, dass** sich an die Öffnung (4) eine in den Behälterhohlraum (3) nach unten erstreckende Rohrleitung (5) anschließt, die zum Einfüllen von Flüssigkeit (1) durch die Öffnung (4) in den Behälterhohlraum (3) dient, wobei die Bildung des Luftpolsters (8) bei einer bestimmten Flüssigkeitstauchhöhe des in den Behälterhohlraum (3) hineinragenden unteren offenen Endes (7) der Rohrleitung (5) erfolgt.

3. Flüssigkeitsbehälter nach Anspruch 2, **dadurch gekennzeichnet, dass** das untere offene Ende (7) der Rohrleitung (5) derart positioniert ist, dass es bei einem Befüllungsgrad von 90 %, vorzugsweise 75 %, vollständig getaucht ist.

4. Flüssigkeitsbehälter nach einem der Ansprüche 1 bis 3, **dadurch gekennzeichnet, dass** das Flüssigkeitskeitsfassungsvermögen des Behälterhohlraums (3) über die Stellvorrichtung (6) stufenweise einstellbar ist.

5. Flüssigkeitsbehälter nach einem der Ansprüche 1 bis 4, **dadurch gekennzeichnet, dass** die Stellvorrichtung (6) ein Entlüftungsrohr (9) aufweist, das in den Behälterhohlraum (3) hineinragt und die Behälterwandung (2) luftdicht durchfasst.

6. Flüssigkeitsbehälter nach Anspruch 5, **dadurch gekennzeichnet, dass** das Entlüftungsrohr (9) die Behälterwandung (2) im Wesentlich horizontal ausgerichtet durchfasst und innerhalb des Behälters gebogen ist, so dass sein unteres offenes Ende (11) im Wesentlichen vertikal ausgerichtet ist.

7. Flüssigkeitsbehälter nach Anspruch 5 oder 6, **dadurch gekennzeichnet, dass** das Entlüftungsrohr (9) neben der Durchfassung (10) an zumindest einer weiteren Stelle (12) innerhalb des Behälters geführt ist.

8. Flüssigkeitsbehälter nach einem der Ansprüche 5 bis 7, **dadurch gekennzeichnet, dass** das Entlüftungsrohr (9) zumindest bereichsweise eine zumindest indirekt mit der Behälterwandung (2) zusammenwirkende strukturierte Außenkontur der stufenweisen Einstellung der Einschublänge aufweist.

9. Flüssigkeitsbehälter nach einem der Ansprüche 5 bis 8, **dadurch gekennzeichnet, dass** das Entlüftungsrohr (9) einen Innendurchmesser von mindestens 3 mm, vorzugsweise mindestens 5 mm, aufweist.

10. Flüssigkeitsbehälter nach einem der Ansprüche 1 bis 3, **dadurch gekennzeichnet, dass** die Stellvorrichtung (6) eine Verschlussvorrichtung (14) zum wahlweisen Verschluss einer zweiten Öffnung (15) im oberen Bereich der Behälterwandung (2) umfasst.

11. Flüssigkeitsbehälter nach einem der Ansprüche 1 bis 10, **dadurch gekennzeichnet, dass** der Behälterhohlraum (3) in vertikaler Richtung eine deutliche größere Ausdehnung als in horizontaler Richtung aufweist.

12. Flüssigkeitsbehälter nach einem der Ansprüche 1 bis 11, **dadurch gekennzeichnet, dass** die Behälterwandung (2) aus spritzgegossenem oder blasgeformtem Kunststoff besteht.

13. Flüssigkeitsbehälter nach einem der Ansprüche 1 bis 12, **dadurch gekennzeichnet, dass** die Behälterwandung (2) mindestens eine Anschlussvorrichtung zur Befestigung mindestens eines weiteren Kraftfahrzeug-Bauteils aufweist.

14. Flüssigkeitsbehälter nach einem der Ansprüche 1 bis 13 mit einer Flüssigkeitsförderpumpe und/oder einem Füllstandssensor.

15. Kraftfahrzeug mit einem Flüssigkeitsbehälter nach einem der Ansprüche 1 bis 14.
